# EUROPEAN PATENT APPLICATION

(11) **EP 4 811 724 A1**
(43) Date of publication of application: **23.09.2026**
(21) Application number: 25465517.8
(22) Date of filing: 19.03.2025
(51) Int. Cl.: H04L 9/40

(54) **METHOD FOR DETERMINATION OF A TRUSTWORTHINESS INDICATOR**

(71) Applicant: Siemens Aktiengesellschaft, 80333 München (DE); Siemens S.R.L., 062204 Bucuresti (RO)
(72) Inventor: FALK, Rainer, 85435 Erding (DE); ASCHAUER, Hans, 81829 Munchen (DE); UNGUREAN, Lucian Andrei, 062204 Bukarest (RO); BOFFGEN, Pascale, 81247 Munchen (DE); MAFTUN, Aliza, 81247 Munchen (DE); SUBRAHMANYAM, Niranjana, 85540 Haar (DE); PASSARELLI, Anne, 80809 Munchen (DE); ZESCHG, Thomas, 81543 Munchen (DE)
(74) Representative: Fierascu, Cosmina-Catrinel

(57) **Abstract**

The invention provides a computer-implemented method for trustworthiness determination. A trustworthiness request is received containing a selection rule of two or more trustworthiness validation rule sets. The selection rule defines which trustworthiness validation rule set is to be applied for which type of trust evidence element. A trust verification engine evaluates a trustworthiness metric by applying the two or more trustworthiness validation rule sets to the trust evidence elements as defined by the selection rule.

## Description

The invention relates to determination of a trustworthiness indicator in distributed ecosystems, and more particularly to a system and method for validating trust evidence.

The validation of trust-related information in distributed ecosystems has become increasingly complex as supply chains and business relationships have grown more intricate. Traditional methods of verifying trustworthiness, such as certificate chain validation, often rely on linear chains with a limited number of certificates. However, modern ecosystems frequently involve more complex trust relationships that can be represented as directed graphs with potentially hundreds of nodes and multiple terminating points.

In these complex scenarios, fixed validation rules may not be sufficient to address the diverse trust expectations of different parties within the ecosystem. Parties may need to validate trust-related information from other entities along the supply chain or in various business contexts. This validation process can involve a wide range of trust evidence, including digital certificates, verifiable credentials, attestations, and even scanned paper documents.

The heterogeneous nature of trust evidence and the varying requirements for different business relationships create challenges in developing a unified approach to trustworthiness validation. Additionally, the subjective nature of trust expectations means that different parties may have distinct criteria for evaluating the same piece of trust evidence.

Current solutions often lack the flexibility to accommodate these diverse validation requirements. They may not easily allow for the application of different validation policies based on the type of trust evidence, the role of the entity in the business context, or the specific trust expectations of the validating party.

It has been appreciated that a method for trustworthiness determination is needed that overcomes one or more of these problems.

It is therefore the object of the present invention to provide an improved method for trustworthiness determination that overcomes one or more of these problems.

This object of the present invention is solved with a method for trustworthiness determination with the features contained in claim 1.

Advantageous aspects of the invention are contained in the subsequent dependent claims, the following description and the drawing.

It is therefore the object of the present invention to provide an improved method for trustworthiness determination that overcomes one or more of the problems associated with fixed validation rules in complex distributed ecosystems.

This object of the present invention is solved with a method for the determination of a trustworthiness indicator with the features contained in claim 1. Advantageous aspects of the invention are contained in the subsequent dependent claims, the following description and the drawing.

According to the invention, a computer-implemented method for the determination of a trustworthiness metric is provided. The method according to the invention includes receiving a trustworthiness request that contains a selection rule of two or more trustworthiness validation rule sets, the selection rule defining which trustworthiness validation rule set is to be applied for which, or which type of, trust evidence element, and using a trust verification engine that evaluates a trustworthiness metric, selecting at least two trustworthiness validation rule sets depending on the selection rule, and applying the two or more selected trustworthiness validation rule sets to the trust evidence elements as defined by the selection rule, and providing the determined trustworthiness metric in response to the trustworthiness request.

The trustworthiness metric may comprise of a list such as a scalar, a group of scalars, one or more vectors or one or more matrices, in which for each trustworthiness validation rule set a digital value is listed, that indicates, whether trustworthiness may be assumed or not. In other embodiments, the values may not be just digital values, but comprise also a qualitative estimation about the level of trustworthiness for each trustworthiness validation rule.

A validation rule set is applied to at least one trust evidence element of a set of trust evidence elements. Preferably, a validation rule set is applied starting with a first trust evidence element of the set of trust evidence elements, and to further trust evidence elements of the set of trust evidence elements that can be determined recursively depending on the already processed trust evidence elements. The recursion terminates depending on the validation rule set, defining when a trustworthiness metric with a confidence acceptable. This can mean that a trustworthiness validation rule set comprises identification information of root trustworthiness elements that are implicitly considered as trusted by the specific trustworthiness validation rule set.

An interim trustworthiness metric may be determined for a selected trustworthiness validation rule set. The finally determined trustworthiness metric in response to the trustworthiness request may be determined by combining the two or more interim trustworthiness metrics corresponding to the at two or more selected trustworthiness validation rule sets according to a trustworthiness metric combination rule. The trustworthiness metric combination rule may be fixed.

Alternatively, the trustworthiness determination request comprises a combination indicator defining the trustworthiness metric combination rule that is to be applied.

This method allows for flexible and modular trustworthiness validation in complex distributed ecosystems by enabling the application of multiple trustworthiness validation rule sets based on the type of trust evidence, addressing the limitations of fixed single validation rules.

By applying multiple trustworthiness validation rule sets, different types or categories of trust evidence elements can be processed in a combined way, resulting in a trustworthiness metric in response to the trustworthiness request. By applying multiple trustworthiness validation rule sets, the trustworthiness metric may be determined based on the perspective of multiple entities or other relevant parties involved in an action within a complex distributed ecosystem. The two or more trustworthiness validation rule sets may also correspond to different trustworthiness expectations of different actors within the complex distributed ecosystem.

In an advantageous aspect of the method according to the invention, the trustworthiness metric is notified. Notifying the trustworthiness result enables the requesting entity or other relevant parties to take appropriate actions based on the determined trustworthiness. The trustworthiness request may comprise at least one identifier of the one or more entities or other relevant parties that are to be notified with the trustworthiness result. A trustworthiness notification may comprise the selection rule of two or more trustworthiness validation rule sets. It is also possible that a trustworthiness notification comprises identifiers of the two or more selected trustworthiness validation rule sets.

In another advantageous aspect of the method according to the invention, the trustworthiness metric is notified to the entity from which the trustworthiness request is received. This direct notification ensures that the requesting entity receives the trustworthiness assessment directly as a response, facilitating efficient further processing, that may depend on the trustworthiness metric.

In another advantageous aspect of the method according to the invention, the trustworthiness metric is cryptographically protected. Cryptographic protection of the trustworthiness metric enhances the security and integrity of the assessment, preventing unauthorized information leakage, unauthorized modifications and ensuring authenticity. The cryptographic protection of the trustworthiness metric may comprise a cryptographic checksum for protecting the integrity and authenticity of the trustworthiness metric, an encryption of the trustworthiness metric, a cryptographic privacy-protection, in particular in the form of a homomorphic encryption or a verifiable credential of the trustworthiness metric, or a combination thereof.

In another advantageous aspect of the method according to the invention, the trustworthiness metric contains a time stamp. Including a time stamp in the trustworthiness metric provides important temporal context, such as the actuality of the trustworthiness metric, allowing the recipient to verify the recency and relevance of the assessment.

In another advantageous aspect of the method according to the invention, the trustworthiness metric contains information about the used trust evidence element(s) and the respectively applied trustworthiness validation rule set(s). This inclusion of detailed information about the evidence and validation rule sets used in the assessment promotes transparency and enables the recipient to understand the basis of the trustworthiness determination, particularly for use cases, where the trustworthiness metrics may be challenged afterwards.

In another advantageous aspect of the method according to the invention, the trustworthiness metric contains a nonce. The inclusion of a nonce in the trustworthiness metric ensures freshness and prevents replay attacks, enhancing the security of the trustworthiness determination process.

In another advantageous aspect of the method according to the invention, the trustworthiness metric contains an attestation of trustworthiness validation conditions, particularly of a computing platform on which the trustworthiness validation rule sets are applied to the trust evidence elements and/or of an execution environment in which the trustworthiness validation rule sets are applied to the trust evidence elements. This attestation provides assurance about the integrity and security of the validation process itself, further increasing confidence in the trustworthiness metric.

In an advantageous aspect of the invention, one or more trustworthiness validation rules include contextual association rules between trust evidence elements. In this ascpect, the contextual association between trust evidence elements can be considered to reliably assess trustworthiness based on the contextual association.

Particularly in another advantageous aspect of the method according to the invention, one or more trust evidence elements comprise an accreditation for an entity to issue or certify trust evidence elements. Advantageously, a trust chain such as the trust relation between the trust evidence elements certified by the accredited entity as a first trust evidence element and the accreditation of the entity to issue such certifications as a second trust evidence element represents a contextual association between the first trust evidence element and the second trust evidence element as mentioned above.

In another advantageous aspect of the method according to the invention, the trustworthiness metric is used for automated workflow approval, particularly workflows for an ordering process or a delivery process. Preferably, the trustworthiness metric is determined for determining a decision for approving a candidate action depending on the trustworthiness metric. The candidate action is conducted or allowed or admitted depending on the decision. In another advantageous aspect of the method according to the invention, the trustworthiness metric is used for automated onboarding, particularly zero-touch onboarding. Preferably, the trustworthiness metric is determined for determining a decision for approving a candidate action depending on the trustworthiness metric. The candidate action may be an onboarding action, such as an onboarding of a specific device. The candidate action is conducted or allowed or admitted depending on the decision. In another advantageous aspect of the method according to the invention, the trustworthiness metric is used for provisioning security credentials. Preferably, the trustworthiness metric in this aspect is determined for determining a decision for approving a candidate action depending on the trustworthiness metric. The candidate action may be a provision action, such as a provisioning of specific credentials to a specific participant and/or party and/or device. The candidate action is conducted or allowed or admitted depending on the decision. Using the trustworthiness metric for provisioning security credentials ensures that only entities meeting specific trustworthiness criteria receive sensitive access rights, enhancing overall system security.

In another advantageous aspect of the method according to the invention, the trustworthiness metric is used for registering a device within a device management system.

Incorporating the trustworthiness metric in device registration processes allows for more secure and informed device management, ensuring that only trusted devices are integrated into the system.

In the following, the invention is described in more details with the help of the drawing, in which
Fig. 1 illustrates a block diagram of a trustworthiness determination system according to a first embodiment of the invention,
Fig. 2 illustrates a block diagram of a trust-based access management system representing a second embodiment of the invention
Fig. 3 illustrates a block diagram of a trustworthiness validation system with risk-based rule selection, according to an embodiment.

Common reference numerals are used throughout the figures to indicate similar features.

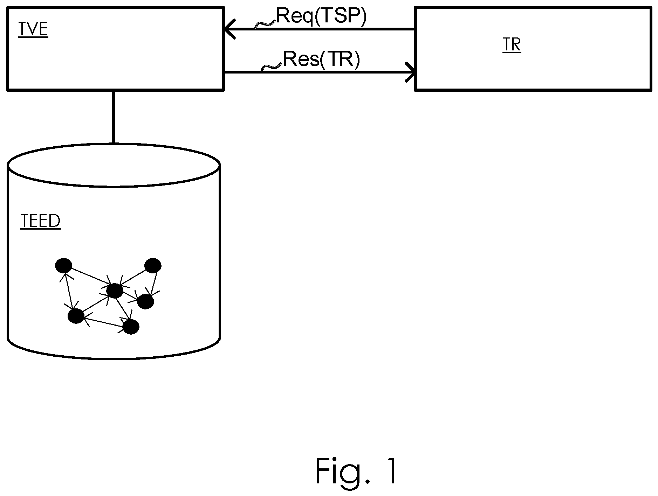

The trustworthiness determination system includes a Trustworthiness Validation Engine TVE and a Trust Evidence Elements Database TEED, as shown in FIG. 1. The Trustworthiness Validation Engine TVE processes trustworthiness requests Req(TSP) and evaluates trustworthiness based on evidence stored in the Trust Evidence Elements Database TEED.

The Trust Evidence Elements Database TEED is implemented as a graph database for maintaining trustworthiness evidence elements. The graph structure allows for efficient storage and retrieval of interconnected trust evidence data. The Trustworthiness Validation Engine TVE accesses the Trust Evidence Elements Database TEED to retrieve relevant trust evidence for evaluation when processing trustworthiness requests Req(TSP).

In other embodiments, which otherwise match the depicted embodiment, the Trust Evidence Elements Database TEED is implemented as a distributed transaction database, such as a distributed ledger or a blockchain.

The Trustworthiness Validation Engine TVE applies multiple, i.e., two or more, trustworthiness validation rule sets to the trust evidence elements retrieved from the Trust Evidence Elements Database TEED. Each trustworthiness validation policy is represented by a specific trustworthiness validation rule set. The trustworthiness validation rule set may comprise a single or multiple rules that is or are applied to trust evidence elements and that represents or represent an algorithm. The specific trustworthiness validation rule sets applied are determined based on a selection rule provided in the trustworthiness request Req(TSP). This allows for flexible and customizable trustworthiness evaluation tailored to different use cases and requirements.

The Trustworthiness Validation Engine TVE receives a trustworthiness request Req(TSP) from a Trustworthiness Requestor TR. The trustworthiness request Req(TSP) contains a selection rule of two or more trustworthiness validation rule sets. The selection rule defines which trustworthiness validation policy is to be applied for which type of trust evidence element stored in the Trust Evidence Elements Database TEED.

The selection rule includes rules for matching trust evidence element types to specific trustworthiness validation rule sets. For example, the selection rule may specify that digitally signed documents use one trustworthiness validation policy, while scanned paper documents use a different trustworthiness validation policy. This allows flexible and context-appropriate validation of different types of trust evidence. In another example, the selection rule may specify a first trustworthiness validation rule set corresponding to the trustworthiness expectations of a first party and a second trustworthiness validation rule set corresponding to the trustworthiness expectations of a second party. The first party and the second party correspond to different actors within the complex distributed ecosystem, e.g., a data provider within an industrial data space, and a data receiver within an industrial data space for trustworthy exchange and use of data within complex ecosystems. Examples for industrial data spaces are Factory-X, Manufacturing-X, Catena-X that allow, e.g., to exchange production data along the supply chain for on-demand manufacturing involving multiple providers of manufacturing services. It is also possible that for each party, multiple trustworthiness validation policies are specified, corresponding to different trust evidence element types. It is furthermore possible that more than two parties are involved in an action within the complex distributed ecosystem, e.g., a data provider, a data receiver, a data exchange compensation provider, a data exchange monitoring service.

In another embodiment, which otherwise coincides with the depicted embodiment, the selection rule is implemented using smart contracts in a blockchain or distributed ledger. The smart contracts encode the rules for selecting and applying trustworthiness validation policies. This provides an immutable and transparent record of the selection rule. When the Trustworthiness Validation Engine TVE processes a request, the smart contract automatically determines and applies the appropriate trustworthiness validation policies based on the trust evidence types.

The Trustworthiness Validation Engine TVE retrieves the relevant trust evidence elements from the Trust Evidence Elements Database TEED. The Trustworthiness Validation Engine TVE then applies the trustworthiness validation policies to the trust evidence elements as specified by the selection rule in the request. This modular approach allows customized trustworthiness evaluation tailored to different use cases and requirements.

The Trustworthiness Validation Engine TVE evaluates a trustworthiness metric by applying two or more trustworthiness validation policies to trust evidence elements as defined by a selection rule. To do so, the Trustworthiness Validation Engine TVE retrieves relevant trust evidence elements from the Trust Evidence Elements Database TEED based on the selection rule provided in a trustworthiness request.

For each trust evidence element, the Trustworthiness Validation Engine TVE determines which trustworthiness validation rule set to apply based on the rules specified in the selection rule. The selection rule maps different types or attributes of trust evidence elements to specific trustworthiness validation policies.

The Trustworthiness Validation Engine TVE then applies the designated trustworthiness validation rule set to evaluate the corresponding trust evidence element. This process involves checking various criteria defined in the trustworthiness validation rule set, such as verifying digital signatures, checking expiration dates, or validating specific attributes of the trust evidence element.

The Trustworthiness Validation Engine TVE repeats this process for all relevant trust evidence elements, applying the appropriate trustworthiness validation rule set to each as specified by the selection rule. The metrics of these individual evaluations are then combined to produce an overall trustworthiness metric Res(TR) which is communicated back to the trustworthiness requestor TR. In another embodiment, which in all other aspects is similar to the depicted embodiment, the trustworthiness validation rule set may include contextual association rules between trust evidence elements. As an example, three trust evidence element may be given, e. g. a first trust evidence element, that represents a root trust evidence element of a government institution and a second trust evidence element, that includes an accreditation issued by the afore-mentioned government institution to a certifier, the accreditation being limited to further issue certifications of type X, e.g. an ISO standard X, and a third trust evidence element, that represents a certificate issued by the afore-mentioned certifier to a manufacturer, but being of type Y, such as an ISO standard ISO Y, which is different from and incompatible with type X. In this embodiment, assessing all three trustworthiness evidence elements individually without contextual association rules, a valid trust chain could erroneously be deduced leading to the assumption of a root of trust. However, applying the contextual association rules mentioned above will instead lead to the observation, that there is no piece of evidence for the certifier as being accredited to issue certificates of type Y.

In further embodiments, that otherwise match the depicted embodiment, the Trustworthiness Validation Engine TVE provides an integrity attestation that confirms the integrity of the Trustworthiness Validation Engine TVE. This integrity attestation covers the compute platform on which the program code implementing the Trustworthiness Validation Engine TVE is executed. The integrity attestation also covers the execution environment in which the Trustworthiness Validation Engine TVE operates.

The integrity attestation allows a trustworthiness requestor to verify the trustworthiness of the Trustworthiness Validation Engine TVE implementation itself.

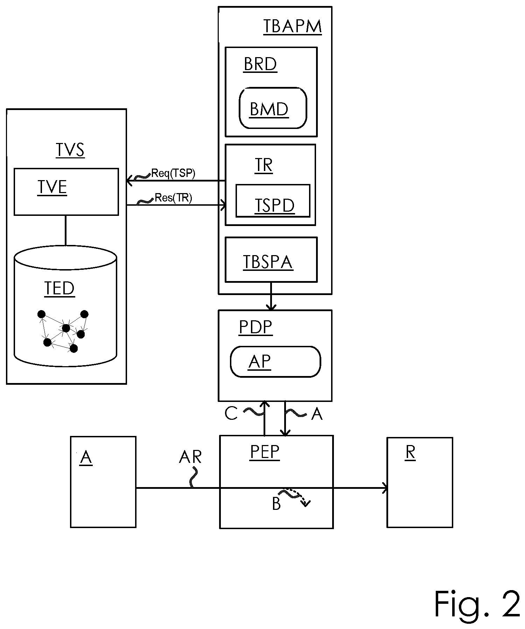

FIG. 2 illustrates as a second embodiment a trust-based access management system. In the depicted embodiment, the Trust Evidence Elements Database TEED as shown in Fig. 1 is now referred to as the Trustworthiness Evidence Database TED. The system comprises a Trust-based Access Policy Manager TBAPM that interacts with various components to manage access based on trustworthiness evaluations, namely on the trustworthiness metric Res(TR).

In the embodiment depicted in Fig. 2, a Business Risk Determination component BRD determines the selection rule based on business risk. The Business Risk Determination component BRD analyzes factors such as the criticality of the trust evidence, the entity associated with the evidence, and potential business impacts to generate an appropriate selection rule.

The Trust-based Access Policy Manager TBAPM includes the Business Risk Determination component BRD. The Trustworthiness Requestor TR initiates trustworthiness evaluations, while a Selection rule Determination module TSPD determines the appropriate trustworthiness validation policies to apply.

The system incorporates a Trustworthiness Validation Service TVS that contains the Trustworthiness Validation Engine TVE. The Trustworthiness Validation Engine TVE processes trustworthiness requests and accesses the Trustworthiness Evidence Database TED to retrieve relevant trust evidence for evaluation.

A Trust-based Security Policy Adaption module TBSPA uses the trustworthiness evaluation metrics to adapt security policies. These adapted policies are then applied by a Policy Decision Point PDP, which utilizes an Access Policy AP to make access control decisions.

The system also includes a Policy Enforcement Point PEP that enforces the access control decisions. The Policy Enforcement Point PEP mediates access attempts between an Actor A and a Resource R, ensuring that access is granted or blocked based on the trust-based policies.

The Trust-based Security Policy Adaption module TBSPA adapts the Access Policy AP used by the Policy Decision Point PDP based on the obtained trustworthiness metric.

The Policy Enforcement Point PEP grants or blocks access by the Actor A to the Resource R based on the adapted Access Policy AP. This enforcement mechanism ensures that access decisions are consistently applied based on the most up-to-date trustworthiness assessments and corresponding policy adaptations.

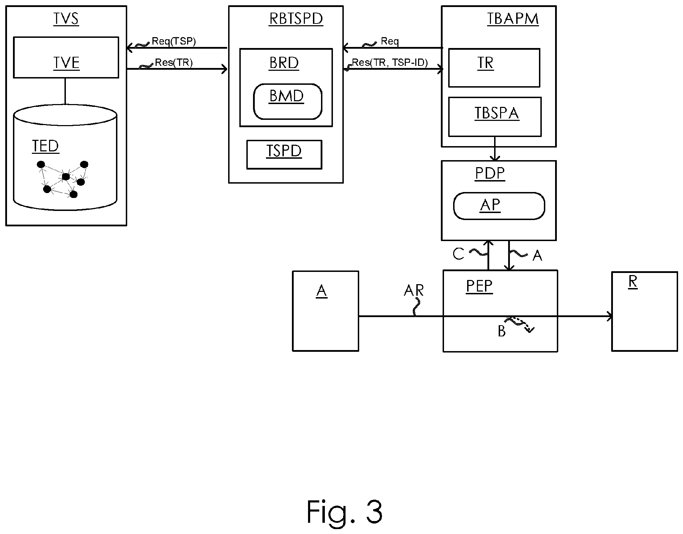

FIG. 3 illustrates a risk-based trustworthiness validation system. The system comprises a Risk-Based Selection rule Determination component RBTSPD that interacts with other system elements to provide trustworthiness validation based on business risk assessment.

The Risk-Based Selection rule Determination component RBTSPD includes the Business Risk Determination component BRD and the Selection rule Determination module TSPD. The Business Risk Determination component BRD, similarly as in the embodiment depicted in Fig. 2, utilizes the Business Model Database BMD to assess business risks associated with trustworthiness requests.

The system incorporates a Trustworthiness Validation Service TVS that contains the Trustworthiness Validation Engine TVE. The Trustworthiness Validation Engine TVE processes trustworthiness requests and accesses a Trustworthiness Evidence Database TED to retrieve relevant trust evidence for evaluation. The Trustworthiness Evidence Database TED stores trust evidence elements in a graph-like structure as described in previous embodiments above.

The Trustworthiness Requestor TR initiates trustworthiness evaluations by sending a request (Req(TSP)) to the Trustworthiness Validation Engine TVE within the Trustworthiness Validation Service TVS. The Trustworthiness Validation Engine TVE processes this request using data from the Trustworthiness Evidence Database TED and sends a response (Res(TR)) back to the Trustworthiness Requestor TR.

The Risk-Based Selection rule Determination component RBTSPD interacts with the Trustworthiness Requestor TR. The Business Risk Determination component BRD receives a request (Req) from the Trustworthiness Requestor TR, and the Selection rule Determination module TSPD sends a response (Res(TR, TSP-ID)) back to the Trustworthiness Requestor TR. This response includes both the trustworthiness metric and an identifier for the applied TVP Selection rule.

A Trust-based Access Policy Manager TBAPM receives input from the Trustworthiness Requestor TR and communicates with the Policy Decision Point PDP. The Trust-based Access Policy Manager TBAPM includes a Trust-based Security Policy Adaption module TBSPA that uses the trustworthiness evaluation metrics to adapt access policies.

The Policy Decision Point PDP contains an Access Policy AP and sends information to the Policy Enforcement Point PEP. The Policy Enforcement Point PEP mediates access between an Actor A and a Resource R based on the decisions made by the Policy Decision Point PDP.

The system adapts access policies based on the trustworthiness assessment metrics, providing a dynamic approach to managing access in environments where trust levels may vary.

To enhance security and integrity, the trustworthiness metric is cryptographically protected. This protection may involve digital signatures or encryption techniques to prevent tampering and ensure the authenticity and/or confidentiality or privacy of the metric.

A time stamp is included in the trustworthiness metric. This time stamp indicates the exact moment when the trustworthiness evaluation was performed, providing a temporal context for the metric.

The trustworthiness metric contains information about the trust evidence elements used in the evaluation process. This information may include identifiers or references to the specific trust evidence elements that were considered during the trustworthiness determination.

Additionally, the trustworthiness metric includes details about the trustworthiness validation policies applied to each trust evidence element. This information allows the recipient to understand which validation criteria were used for different types of evidence.

A nonce is incorporated into the trustworthiness metric and the trustworthiness metric contains an attestation of trustworthiness validation conditions. The nonce may be determined by Trustworthiness Requestor TR and provided as part of the trustworthiness request. This attestation includes information about the computing platform on which the trustworthiness validation policies are applied to the trust evidence elements.

Furthermore, the attestation of trustworthiness validation conditions includes details about the execution environment in which the trustworthiness validation policies are applied to the trust evidence elements.

Another embodiment of the invention includes the application of the trustworthiness metric is in automated onboarding processes, particularly zero-touch onboarding. In this context, the trustworthiness metric serves as a key factor in determining whether a device or entity can be onboarded automatically without manual intervention. When the trustworthiness metric meets specified thresholds, the system initiates the onboarding process, configuring necessary settings and granting appropriate access levels based on the assessed trustworthiness.

The trustworthiness metric may, in other embodiments, also be utilized for provisioning security credentials. Based on the level of trustworthiness determined, the system automatically assigns and distributes appropriate security credentials to devices, users, or entities. This ensures that access rights and security measures are commensurate with the assessed trustworthiness, enhancing overall system security.

Furthermore, the trustworthiness metric plays a role in registering devices within a device management system. When a new device is introduced, the system evaluates its trustworthiness. If the trustworthiness metric meets predefined criteria, the device is automatically registered in the device management system. This registration process includes assigning appropriate management policies, security settings, and access rights based on the trustworthiness assessment.

## Claims

1. Computer-implemented method for trustworthiness determination, wherein
- a trustworthiness request (TR) is received that contains a selection rule (TSPD) of two or more trustworthiness validation rule sets, the selection rule defining, which trustworthiness validation rule set is to be applied for which, or which type of, trust evidence element and
- wherein a trust verification engine (TVE) is used that evaluates a trustworthiness metric applying the two or more trustworthiness validation rule sets to the trust evidence elements as defined by the selection rule.

2. Method according to claim 1, wherein the trustworthiness metric (Res(TR)) is notified.

3. Method according to claim 1 or 2, wherein the trustworthiness metric (Res(TR)) is notified to the entity, the trustworthiness request is received from (TR).

4. Method according to one of the previous claims, wherein the trustworthiness metric (Res(TR)) is cryptographically protected.

5. Method according to one of the previous claims, wherein the trustworthiness metric (Res(TR)) contains a time stamp.

6. Method according to one of the previous claims, wherein the trustworthiness metric (Res(TR)) contains information about the used trust evidence element/s and the respectively applied trustworthiness validation rule set/s.

7. Method according to one of the previous claims, wherein the trustworthiness metric (Res(TR)) contains a nonce.

8. Method according to one of the previous claims, wherein the trustworthiness metric (Res(TR)) contains an attestation of trustworthiness validation conditions, particularly a computing platform, on which the trustworthiness validation rule sets are applied to the trust evidence elements and/or an execution environment in which the trustworthiness validation rule set are applied to the trust evidence elements.

9. Method according to one of the previous claims, wherein one or more trustworthiness validation rules include contextual association rules between trust evidence elements.

10. Method according to one of the previous claims, wherein one or more trust evidence elements comprise an accreditation for an entity to issue or certify trust evidence elements.

11. Method according to one of the previous claims, wherein the trustworthiness metric (Res(TR)) is used for automated workflow approval, particularly workflows for an ordering process or a delivery process.

12. Method according to one of the previous claims, wherein the trustworthiness metric (Res(TR)) is used for automated onboarding, particularly zero-touch onboarding.

13. Method according to one of the previous claims, wherein the trustworthiness metric (Res(TR)) is used for provisioning security credentials.

14. Method according to one of the previous claims, wherein the trustworthiness metric (Res(TR)) is used for registering a device within a device management system.
